(19) Europäisches Patentamt
European Patent Office
Office européen des brevets

(11) **EP 2 284 667 A1**

(12) **EUROPEAN PATENT APPLICATION**

(43) Date of publication:
**16.02.2011 Bulletin 2011/07**

(51) Int Cl.:
***G06F 3/042*** *(2006.01)*

(21) Application number: **10171501.9**

(22) Date of filing: **30.07.2010**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO SE SI SK SM TR**<br>Designated Extension States:<br>**BA ME RS** | (71) Applicant: **Sony Corporation**<br>**Minato-ku**<br>**Tokyo 108-0075 (JP)** |
| (30) Priority: **07.08.2009 JP 2009184721** | (72) Inventor: **Rekimoto Junichi**<br>**Tokyo 108-0075 (JP)** |
| | (74) Representative: **Mills, Julia**<br>**D Young & Co LLP**<br>**120 Holborn**<br>**London EC1N 2DY (GB)** |

(54) **Position detection apparatus and position detection method**

(57)     A position detection apparatus is provided including an irradiation unit for emitting an irradiation pattern which is a light group including one or more kinds of irradiation lights to a detection object in space, an imaging unit for obtaining one or more images by imaging the detection object, an imaging control unit for controlling imaging timings, based on irradiation timings at each of which the irradiation pattern is emitted, an analysis unit for extracting an irradiated site in which the detection object is irradiated with the irradiation pattern and for analyzing a positional relationship between the detection object and the irradiation pattern, based on one or more images, and a movement processing unit for moving an irradiated position of the irradiation pattern so that the detection object will be irradiated with the irradiation pattern, based on the positional relationship between the detection object and the irradiation pattern.

**FIG. 1**

## Description

Field of the Invention

The present invention relates to a position detection apparatus and a position detection method, and more specifically to a position detection apparatus and a position detection method for detecting the position of a detection object in space.

Technology using a gesture for operating a device has been developed. For example, the history of technology for recognizing a gesture using a camera is long, and many researches have been developed since Put-That-There system developed at MIT. In order to recognize a gesture more accurately, it is requested to detect the positions of a plurality of characteristic points such as fingertips or joint positions in real time and with high accuracy. For example, in JP-A-11-24839, and in JP-A-2009-43139, there is disclosed a technology for recognizing a plurality of characteristic points of a user performing a gesture, thereby enabling interactive input and output by a variety of operational methods. Moreover, there are also many cases where a user has a glove, a marker or the like on his/her hand to facilitate a characteristic point to be recognized, thereby trying to recognize a more complicated operation.

However, as for the technology for recognizing a gesture by a camera, there remain issues such as difficulty of accurately recognizing a complicated operation with a fingertip and difficulty of stably recognizing movement of characteristic points in a changing lightning environment. Moreover, in the case of trying to recognize a more complicated operation by putting a glove, a marker or the like on user's hand, preparation time is necessary for putting on the marker or the like. Consequently, there is an issue that such recognition method is unsuitable for use in daily life or use by an indefinite number of users.

In light of the foregoing, it is desirable to provide a position detection apparatus and a position detection method which are novel and improved, and which are capable of obtaining the three-dimensional position of a detection object in space stably and with high accuracy.

Various respective aspects and features of the invention are defined in the appended claims. Combinations of features from the dependent claims may be combined with features of the independent claims as appropriate and not merely as explicitly set out in the claims.

According to an embodiment of the present invention, there is provided a position detection apparatus including an irradiation unit for emitting an irradiation pattern which is a light group including one or more kinds of irradiation lights to a detection object in space, an imaging unit for obtaining one or more images by imaging the detection object, an imaging control unit for controlling imaging timings of the imaging unit, based on irradiation timings at each of which the irradiation unit emits the irradiation pattern, an analysis unit for extracting an irradiated site in which the detection object is irradiated with the irradiation pattern and for analyzing a positional relationship between the detection object and the irradiation pattern, based on one or more images obtained by the imaging unit, and a movement processing unit for moving an irradiated position of the irradiation pattern so that the detection object will be irradiated with the irradiation pattern, based on the positional relationship between the detection object and the irradiation pattern analyzed by the analysis unit.

According to an embodiment of the present invention, the imaging unit images the space to which the irradiation pattern is emitted, at the timings at each of which the irradiation pattern is emitted and the imaging unit obtains the images. The analysis unit extracts, from the obtained images, the irradiated site of the detection object irradiated with the irradiation pattern and analyses the positional relationship between the detection object and the irradiation pattern. The movement processing unit moves, from the positional relationship between the detection object and the irradiation pattern, the irradiated position of the irradiation pattern so that the detection object will be irradiated with the irradiation pattern. In this manner, it is possible to always irradiate the detection object with the irradiation pattern and to recognize the position of the detection object in space stably and with high accuracy.

Here, the irradiation pattern may include at least a first irradiation pattern and a second irradiation pattern emitted at different timings. At this time, the imaging control unit may cause the imaging unit to obtain an image at an irradiation timing at which the first irradiation pattern is emitted and an image at an irradiation timing at which the second irradiation pattern is emitted, the analysis unit may compare a first image obtained when the first irradiation pattern is emitted with a second image obtained when the second irradiation pattern is emitted, the analysis unit may recognize each of irradiated positions of the first irradiation pattern and the second irradiation pattern on the detection object, and the movement processing unit may move an irradiated position of the irradiation pattern based on the irradiated positions of the first irradiation pattern and the second irradiation pattern on the detection object.

Moreover, the irradiation pattern may be configured to include the first irradiation pattern including a first photic layer and a third photic layer which are adjacent to each other in a moving direction of the irradiation pattern and the second irradiation pattern including a second photic layer positioned in between the first photic layer and the third photic layer. At this time, the analysis unit may determine that the irradiation pattern is cast on the detection object when the detection object is irradiated with the first photic layer and the second photic layer.

Furthermore, when the detection object is irradiated only with the first photic layer, the movement processing unit may move the irradiation pattern so that the detection object will be further irradiated with the second photic layer, and when the detection object is irradiated with the first photic layer, the second photic layer, and the third photic layer, the movement processing unit may move the irradiation pattern so that the detection object will be irradiated only with the first photic layer and the second photic layer.

Moreover, the irradiation pattern may include a first photic layer and a second photic layer which are adjacent to each other with a predetermined distance in between in a moving direction of the irradiation pattern and which are emitted at the same irradiation timings. At this time, the imaging control unit may cause the imaging unit to obtain one or more images at the irradiation timings of the irradiation pattern, the analysis unit may recognize from one image obtained by the imaging unit each of the irradiated positions of the first photic layer and the second photic layer on the detection object, and the movement processing unit may move the irradiated position of the irradiation pattern based on the irradiated positions of the first photic layer and the second photic layer on the detection object.

Furthermore, when the detection object is irradiated only with the first photic layer, the analysis unit may determine that the irradiation pattern is cast on the detection object. At this time, when the detection object is not irradiated with the irradiation pattern, the movement processing unit may move the irradiation pattern so that the detection object will be irradiated with the first photic layer, and when the detection object is irradiated with the first photic layer and the second photic layer, the movement processing unit may move the irradiation pattern so that the detection object will be irradiated only with the first photic layer.

Moreover, the analysis unit may be capable of analyzing positional relationships between a plurality of the detection objects and the irradiation pattern, and the movement processing unit may move an irradiated position of the irradiation pattern based on each of the positional relationships between each of the detection objects and the irradiation pattern.

The irradiation pattern may be formed in a planar membrane, and the movement processing unit may move the irradiation pattern so as to cover a plurality of detection objects included in the space. Alternatively, the irradiation pattern may be provided for each of predetermined areas formed by dividing the space, and the movement processing unit may move an irradiated position of the irradiation pattern so that a detection object included in the area will be irradiated with the irradiation pattern.

Moreover, the position detection apparatus may further include a position calculation unit for calculating a position of the detection object. At this time, the position calculation unit may calculate a three-dimensional position of the detection object in the space based on the images obtained by the imaging unit and an irradiation image formed from the viewpoint of the irradiation unit. The position detection unit may calculate the three-dimensional position of the detection object in the space by using, for example, the epipolar geometry.

According to another embodiment of the present invention, there is provided a position detection method, including the steps of emitting an irradiation pattern which is a light group including one or more kinds of irradiation lights to a detection object in space, controlling imaging timings of the imaging unit for imaging the detection object, based on irradiation timings at each of which the irradiation unit emits the irradiation pattern, obtaining one or more images by the imaging unit, based on the imaging timings, extracting an irradiated site in which the detection object is irradiated with the irradiation pattern and for analyzing a positional relationship between the detection object and the irradiation pattern, based on one or more images obtained by the imaging unit, and moving an irradiated position of the irradiation pattern so that the detection object will be irradiated with the irradiation pattern, based on the positional relationship between the detection object and the irradiation pattern.

According to the embodiments of the present invention described above, there can be provided the position detection apparatus and the position detection method, capable of obtaining the three-dimensional position of a detection object in space stably and with high accuracy. Embodiments of the invention will now be described with reference to the accompanying drawings, throughout which like parts are referred to by like references, and in which:

FIG. 1 is an explanatory diagram showing a configuration example of a position detection apparatus according to an embodiment of the present invention;
FIG. 2 is a block diagram showing a configuration of the position detection apparatus according to the embodiment;
FIG. 3 is a flowchart showing a position detection method by the position detection apparatus according to the embodiment;
FIG. 4A is a graph showing an example of irradiation timings by an irradiation unit;
FIG. 4B is a graph showing an example of the irradiation timings by the irradiation unit;
FIG. 5 is a graph for explaining a determination method of imaging timings of an imaging control unit;
FIG. 6 is an explanatory diagram showing images generated by calculating the difference of two types of images of an irradiation pattern captured by an imaging unit;
FIG. 7 is an explanatory diagram showing positional relationships between the irradiation pattern and a detection object and moving directions of the irradiation pattern based on the positional relationships;

FIG. 8 is an explanatory diagram showing the relationship between an image showing the position of the detection object obtained from the images captured by the imaging unit and an image formed from the viewpoint of the irradiation unit;

FIG. 9 is an explanatory diagram showing the relationship between a normal image obtained by the imaging unit and an image in which only the detection object is extracted;

FIG 10 is an explanatory diagram showing a calculation method of the position of the detection object; and

FIG. 11 is an explanatory diagram showing positional relationships, in the case of using an irradiation pattern including one kind of light, between the irradiation pattern and a detection object and the moving direction of the irradiation pattern based on the positional relationship.

Hereinafter, preferred embodiments of the present invention will be described in detail with reference to the appended drawings. Note that, in this specification and the appended drawings, structural elements that have substantially the same function and structure are denoted with the same reference numerals, and repeated explanation of these structural elements is omitted.

In addition, the description will be made in the following order.

1. Outline of position detection apparatus
2. Specific configuration example of position detection apparatus

< 1. Outline of position detection apparatus >

[Configuration example of position detection apparatus]

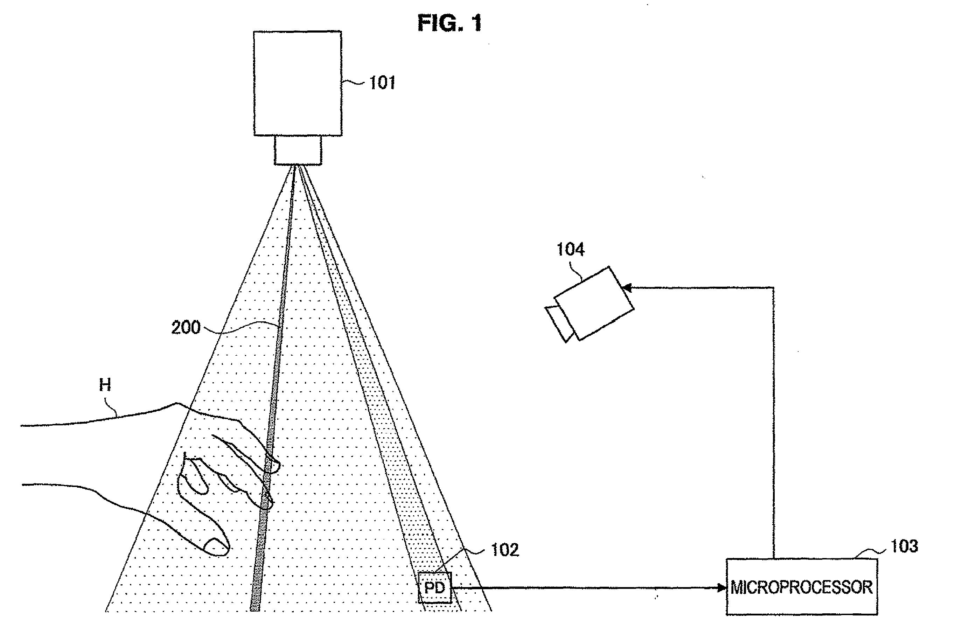

First, a configuration example of a position detection apparatus according to an embodiment of the present invention will be described based on FIG. 1. In addition, FIG. 1 is an explanatory diagram showing a configuration example of the position detection apparatus according to the present embodiment.

The position detection apparatus according to the present embodiment is an apparatus for recognizing reflection of irradiation light emitted by an irradiation unit, by using an imaging unit which images in synchronization therewith, and for obtaining the three-dimensional position of a detection object in space. Such position detection apparatus can include a projector 101 which is the irradiation unit, a PD (Photo Detector) 102 which is a detection unit for detecting the irradiation light, a microprocessor 103, and a camera 104 which is the imaging unit for obtaining an image, for example, as shown in FIG 1.

The projector 101 outputs irradiation light to space, in a predetermined irradiation pattern 200. The irradiation pattern 200 is a light group including one or more kinds of irradiation lights and is used for specifying the position of a detection object in air. The irradiation pattern 200 is formed by a shape including one or more membranous photic layers, for example. The one or more membranous photic layers can be formed by emitting light once or more times. The projector 101 moves the irradiated position of the irradiation pattern 200 so that the detection object will be always irradiated with the irradiation pattern 200, based on the positional relationship between the detection object such as a user's fingertip and the irradiation pattern 200.

The PD 102 detects the irradiation light output by the projector 101 and outputs the detection result to the microprocessor 103. The PD 102 is provided for detecting an irradiation timing of the irradiation pattern 200 emitted from the projector 101. The microprocessor 103 recognizes the irradiation timings of the irradiation pattern 200 based on the detection result of the PD 102 and generates imaging timings of images by the camera 104. The generated imaging timings are output to the camera 104. The camera 104 captures the image of the space to which the irradiation pattern 200 is output, based on the imaging timings.

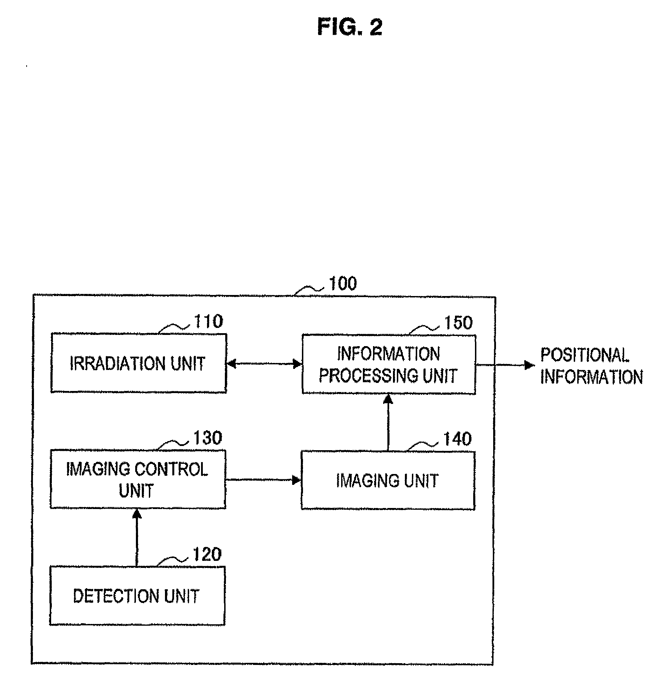

The images captured by the camera 104 based on the imaging timing is subjected to image processing by an information processing unit (corresponding to reference numeral 150 in FIG. 2), and thereby the irradiated site of the detection object irradiated with the irradiation pattern 200 can be recognized. This makes it possible to recognize the positional relationship between the detection object and the irradiation pattern 200. In the case where it is determined from the recognized positional relationship between the detection object and the irradiation pattern 200 that the detection object is not properly irradiated, the projector 101 moves the irradiated position of the irradiation pattern 200 so that the detection object will be always irradiated with the irradiation pattern 200 in a predetermined positional relationship. In this manner, the detection object is caused to be always irradiated with the irradiation pattern 200 in the predetermined positional relationship.

Moreover, when the irradiated site of the detection object irradiated with the irradiation pattern 200 is recognized, the position of the detection object in the captured images can be detected. Furthermore, the distance between the detection object and the camera 104 can be determined from the irradiated position of the irradiation pattern 200 in space. This makes it possible to find the three-dimensional position of the detection object in space. Here, as described above, the irradiation pattern 200 is moved so that the detection object will be always irradiated with the irradiation pattern 200 in the predetermined positional relationship. The position detection apparatus according to the present embodiment calculates the three-dimensional position of the detection object by using such irradiated position of the irradiation pattern 200 and thereby can detect the position of the detection object in space stably and with high accuracy.

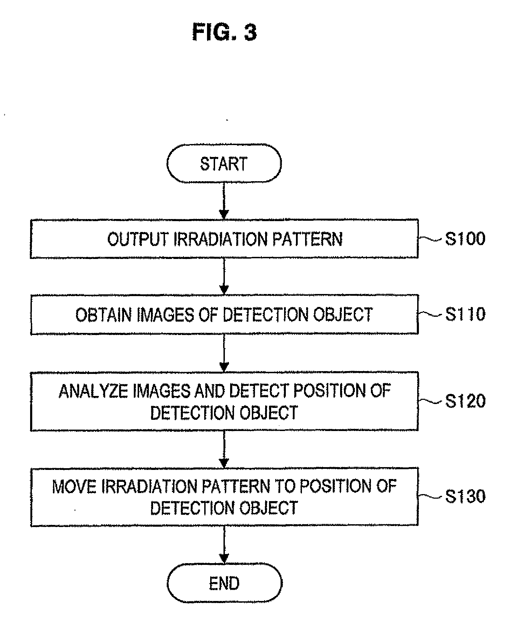

In the following, a configuration of the position detection apparatus 100 according to the present embodiment and the position detection method of the detection object using the position detection apparatus 100 will be described more specifically, based on FIG. 2 and FIG. 3. In addition, FIG. 2 is a block diagram showing the configuration of the position detection apparatus 100 according to the present embodiment. FIG. 3 is a flowchart showing the position detection method by the position detection apparatus 100 according to the present embodiment.

[Configuration of position detection apparatus]

The position detection apparatus 100 according to the present embodiment includes an irradiation unit 110, a detection unit 120, an imaging control unit 130, an imaging unit 140, and the information processing unit 150, as shown in FIG. 2.

The irradiation unit 110 outputs the irradiation pattern 200 including irradiation light, in order to specify the position of the detection object in space. The irradiation light forming the irradiation pattern 200 may be visible light or invisible light. The irradiation pattern 200 is configured to be a pattern by which the irradiated position of the detection object can be specified, and the irradiation pattern 200 can be configured in a variety of ways depending on an irradiation timing to emit the irradiation light or an irradiated position of the irradiation light. Such irradiation unit 110 for emitting the irradiation pattern 200 may be the projector 101 shown in FIG. 1, an infrared light emitting device or the like, for example. The irradiation unit 110 moves the irradiation pattern 200 so that the detection object will be irradiated with predetermined irradiation light, according to an instruction of the information processing unit 150 described below.

The detection unit 120 detects the irradiation timing of the irradiation pattern 200 by the irradiation unit 110. The detection unit 120 may be a light receiving element such as the PD 102 for directly detecting the irradiation light output by the irradiation unit 110, as shown in FIG 1, for example. In this case, the detection unit 120 outputs an electrical signal corresponding to the intensity of the received irradiation light as the detection result. Alternatively, the detection unit 120 may be a control circuit within the irradiation unit 110 for controlling the irradiation timing to emit the irradiation pattern 200. In this case, a circuit signal indicating the irradiation timing which the control circuit outputs is used as the detection result by the detection unit 120. The detection unit 120 outputs the detection result to the imaging control unit 130.

The imaging control unit 130 generates imaging timings of the imaging unit 140 based on the detection result of the detection unit 120. The imaging control unit 130 can recognize, from the detection result of the detection unit 120, the irradiation timings of the irradiation light output from the irradiation unit 110. In the present embodiment, in order to recognize the position of the detection object, the images of the times when the irradiation pattern 200 is emitted are used. Accordingly, the imaging control unit 130 recognizes, from the detection result of the detection unit 120, the irradiation timings at the times when the irradiation pattern is output, and the imaging control unit 130 generates, based on the irradiation timings, the imaging timings at which the imaging unit 140 obtains the image. The imaging control unit 130 outputs the generated imaging timings to the imaging unit 140.

The imaging unit 140 captures the image of the space to which the irradiation pattern 200 is emitted, based on the imaging timings. By taking the image at the imaging timing generated by the imaging control unit 130, the imaging unit 140 can obtain the image at the times when the predetermined irradiation pattern is emitted. The imaging unit 140 outputs the captured images to the information processing unit 150.

The information processing unit 150 is a functional unit for calculating the position of the detection object. The information processing unit 150 detects the irradiated site of the detection object irradiated with the irradiation pattern 200, based on the images obtained by the imaging unit 140 and by using a detection method described below. This enables the information processing unit 150 to analyze the positional relationship between the irradiation pattern 200 and the detection object. From the analyzed positional relationship between the irradiation pattern 200 and the detection object, the information processing unit 150 generates moving information for moving the irradiation pattern 200 and outputs the moving information to the irradiation unit 110 so that the detection object will be irradiated with the irradiation pattern 200 in a predetermined positional relationship. The irradiation unit 110 changes the irradiated position of the irradiation pattern 200 based on the moving information input from the information processing unit 150. In this manner, the position of the detection object calculated by the information processing unit 150 is used for determining the irradiated position of the irradiation pattern 200 of the next time.

Moreover, the information processing unit 150 calculates the three-dimensional position of the detection object in space based on the irradiated position of the irradiation pattern 200 input from the irradiation unit 110 and the positional information of the irradiated site of the detection object irradiated with the irradiation pattern 200. In addition, the calculation method of the three-dimensional position of the detection object will be described below. The information processing unit 150 can output the calculated three-dimensional position of the detection object as positional information to an external device. The positional information of the detection object in space can be used for recognizing a gesture being performed by a user, for example.

[Outline of position detection method]

Next, an outline of the position detection method by the position detection apparatus 100 according to the present embodiment will be described based on FIG. 3.

In the position detection method according to the present embodiment, the irradiation unit 110 first emits the predetermined irradiation pattern 200 to the space where the detection object exists (step S100). Next, the imaging unit 140 obtains the images of the detection object in the space (step S110). At this time, the imaging unit 140 obtains the images in synchronization with the irradiation timings of the predetermined irradiation pattern 200, based on the imaging timings generated by the imaging control unit 130.

Furthermore, the information processing unit 150 analyzes the images captured by the imaging unit 140 and detects the position of the detection object (step S120). The information processing unit 150 recognizes the irradiated site of the detection object irradiated with the irradiation pattern 200 from the captured images. This enables the information processing unit 150 to detect the positional relationship between the detection object and the irradiation pattern 200, namely, how much the detection object is irradiated with the irradiation pattern 200.

After that, the information processing unit 150 generates, from the positional relationship between the detection object and the irradiation pattern 200, the moving information for moving the irradiated position of the irradiation pattern 200 so that the detection object will be irradiated with the irradiation pattern 200 in the predetermined positional relationship (S130). The information processing unit 150 outputs the generated moving information to the irradiation unit 110. The irradiation unit 110 moves the irradiated position of the irradiation pattern 200 based on the input moving information and irradiates with the irradiation pattern 200 and the detection object in the predetermined positional relationship.

The position detection method of the detection object by the position detection apparatus 100 according to the present embodiment has been described above. In this manner, the irradiation pattern 200 is moved so that the detection object will be always irradiated, in the predetermined positional relationship, with the irradiation pattern 200 output from the irradiation unit 110, and thereby the position of the detection object in space can be detected with high accuracy.

< 2. Specific configuration example of position detection apparatus >

Subsequently, a specific example of the position detection method of the detection object using the position detection apparatus 100 according to the present embodiment will be shown in the following. In addition, in the following specific example, it is assumed that a user is in the space to which the irradiation pattern 200 is output and that the detection object of the position detection apparatus 100 is the tip of a finger F of the user. The position detection apparatus 100 moves the irradiation pattern 200 to focus the irradiation pattern 200 on the fingertip of the user.

[First specific example: position detection method using irradiation pattern including two colored light]

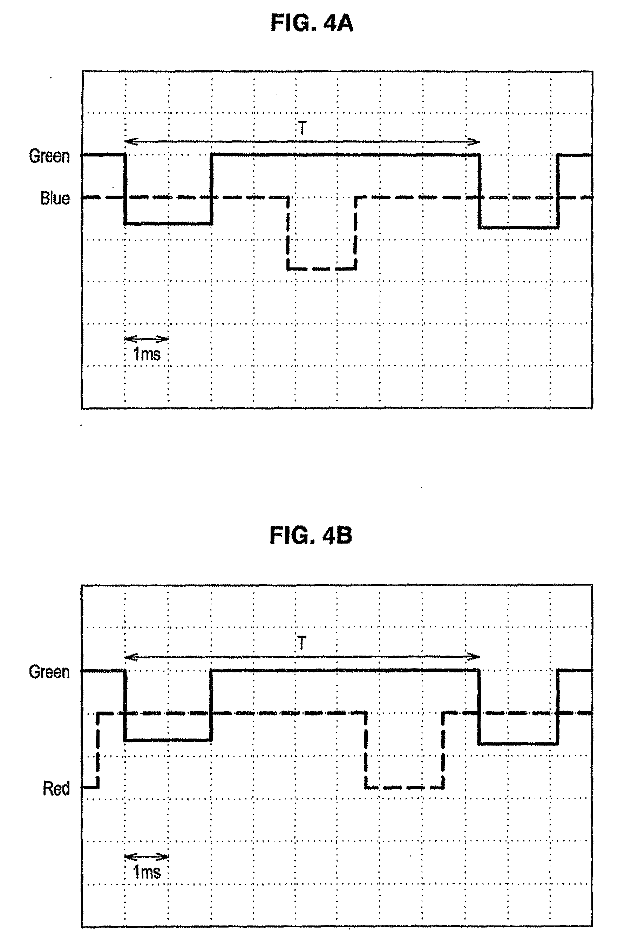

First, as a first specific example, a position detection method using the irradiation pattern 200 including two colored light will be described based on FIG. 4A to FIG. 10. In the present example, the irradiation pattern 200 including two colored light refers to a light pattern including two visible lights with different wavelengths. In the following, as an example of the irradiation pattern 200, an irradiation pattern in which a membranous green (G) light and red (R) light are stacked into three layers in the order of green, red, and green.

By forming the irradiation pattern 200 from the visible lights, the user can visually confirm the position of the fingertip being detected. This enables the user to visually confirm whether or not the fingertip is accurately detected, and at the same time, can perform an act of bringing the fingertip into proximity with the irradiation pattern or moving the fingertip away from the irradiation pattern. In this manner, a user interface with high interactivity can be configured by using the visible lights.

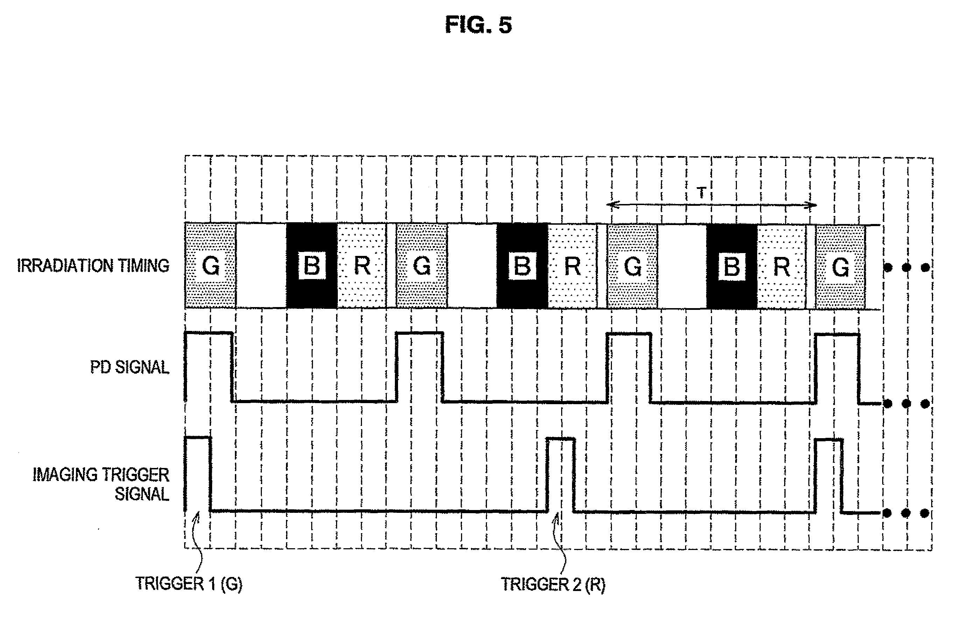

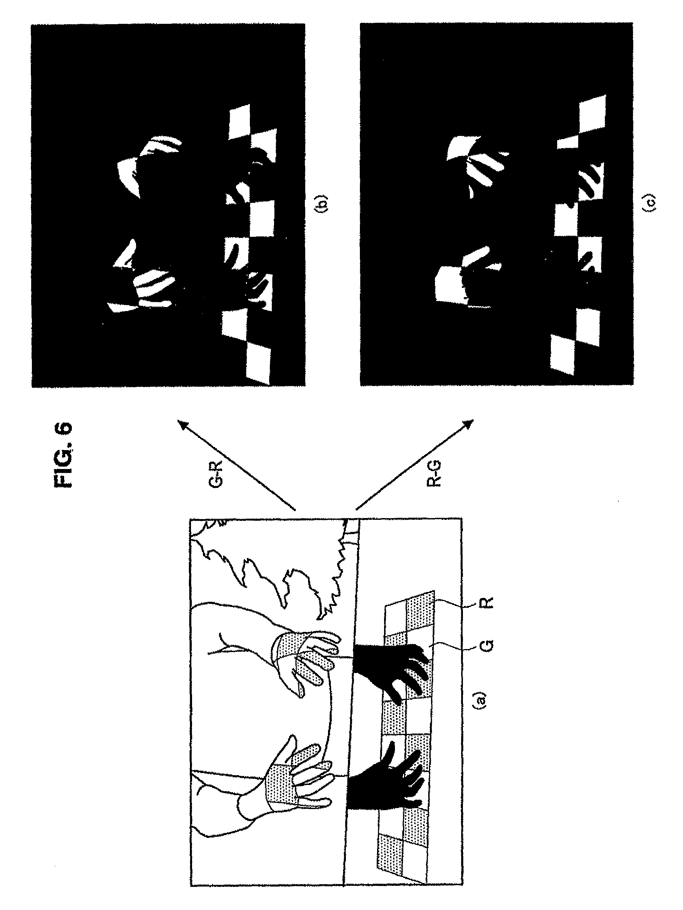

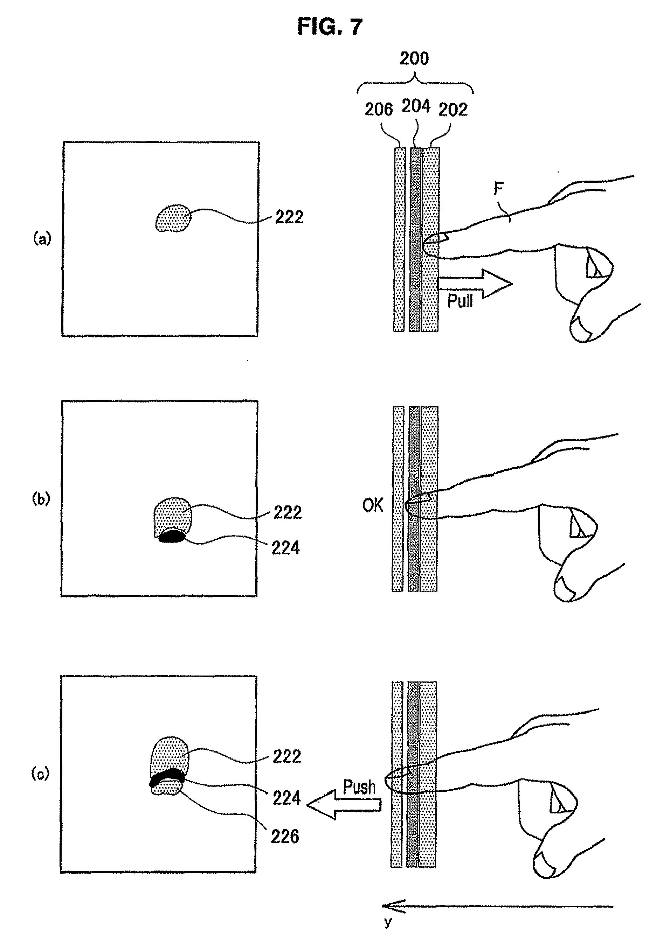

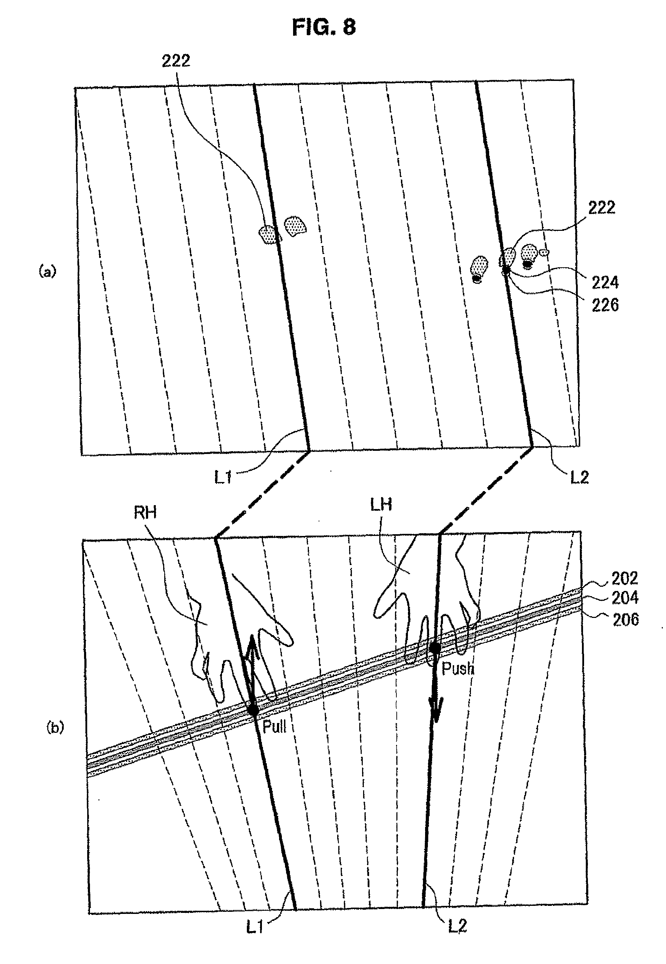

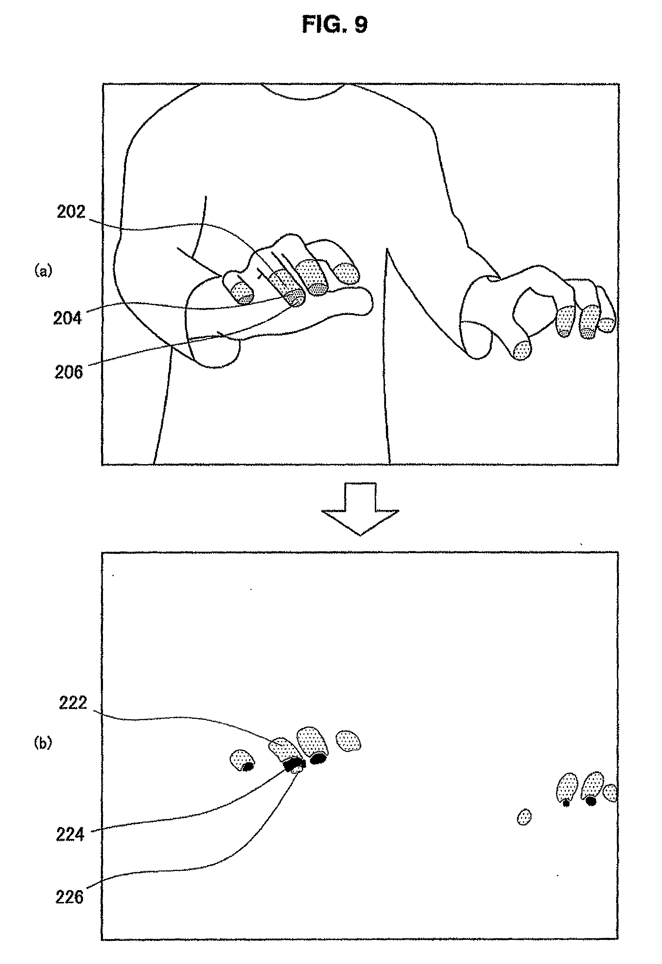

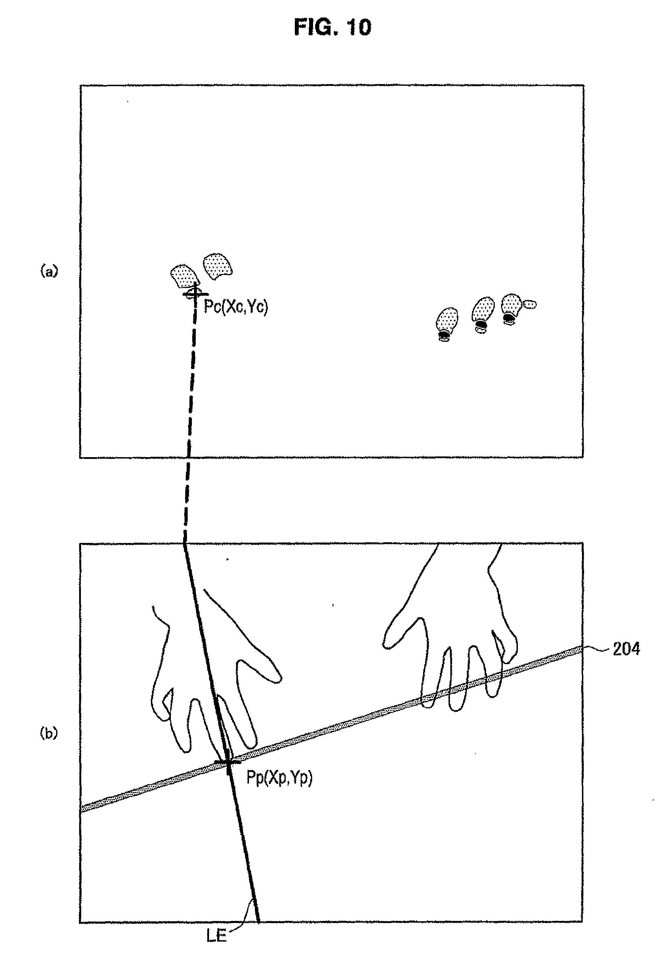

In addition, FIG. 4A and FIG. 4B are graphs showing examples of the irradiation timings by the irradiation unit 110. FIG. 5 is a graph for explaining a determination method of the imaging timings of the imaging control unit 130. FIG. 6 is an explanatory diagram showing images generated by calculating the difference of two types of images of the irradiation pattern captured by the imaging unit 140. FIG. 7 is an explanatory diagram showing positional relationships between the irradiation pattern and the detection object and moving directions of the irradiation pattern based on the positional relationships. FIG. 8 is an explanatory diagram showing the relationship between an image showing the position of the detection object obtained from the images captured by the imaging unit 140 and an image formed from the viewpoint of the irradiation unit 110. FIG. 9 is an explanatory diagram showing the relationship between a normal image obtained by the imaging unit 140 and an image in which only the detection object is extracted. FIG. 10 is an explanatory diagram showing a calculation method of the position of the detection object.

[Generation of subtraction image of detection object]

First, based on FIG 4A to FIG. 6, there will be described a processing of generating a subtraction image for extracting, from the images obtained by the imaging unit 140, the irradiated site of the fingertips irradiated with the irradiation pattern 200 used for detecting the positional relationship between the fingertips which is the detection object and the irradiation pattern 200.

In the present example, the irradiation unit 110 emits to space the irradiation pattern 200 including the layered green (G) light and red (R) light, as described above. At this time, the irradiation unit 110 may be, for example, a DLP projector for irradiating the three primary colors RGB at different timings. The DLP projector is a device for generating a projector image by swinging a micro-mirror array at high speed. With use of such DLP projector, the green (G) light, blue (B) light and red (R) light can be sequentially output, for example, at the irradiation timings shown in FIG 5 so as to flash at high speed.

The irradiation timing at which the irradiation unit 110 outputs the irradiation light is preliminarily set by a device. For example, the irradiation unit 110 emits each light at each of the timings shown in FIG. 4A and 4B. Each light is emitted at each regular interval and, for example, the green (G) light is emitted with period T (e.g., about 8.3ms). Here, for example, if a green signal indicating a timing to emit the green (G) light is used as a reference, the blue (B) light is emitted about T/2 behind the green (G) light. Moreover, the red (R) light is emitted about 3/4T behind the green (G) light. The irradiation unit 110 outputs each of the RGB lights based on these signals output by the control circuit provided within the irradiation unit 110.

The irradiation unit 110 forms membranous light by changing the tilt of the micro-mirror array and emits the light to space. In the present example, as described above, with use of the irradiation pattern 200 formed by stacking the two green (G) photic layers and one red (R) photic layer, the positional relationship between the fingertips which is the detection object and the irradiation pattern 200 is recognized. Accordingly, the imaging unit 140 obtains, among the irradiation pattern 200, an image at the point when the green (G) light is emitted and an image at the point when the red (R) light is emitted. The imaging timings at which the images are obtained by the imaging unit 140 are generated as an imaging trigger signal by the imaging control unit 130.

The imaging control unit 130 generates the imaging trigger signal for obtaining the images at the timings at each of which the green (G) light and the red (R) light is emitted, based on the irradiation timing of the irradiation unit 110. The irradiation timing may be recognized by directly detecting the irradiation light with use of the light receiving element such as the PD 102 as shown in FIG. 1, for example. In this case, the light receiving element (in the present example, a light receiving element for detecting the green (G) light and a light receiving element for detecting the red (R) light) for detecting the irradiation light at the time of whose irradiation an image is obtained, is at least provided in space. Then, the imaging control unit 130 generates the imaging trigger signal which turns on when either of these light receiving elements detects light. Alternatively, a light receiving element for detecting reference light can be provided in space, and the imaging trigger signal can be generated based on an electrical signal output by the light receiving element.

For example, using the green (G) light as a reference, the light receiving element for detecting the green (G) light is provided in space. At this time, the electrical signal (PD signal) output by the light receiving element is, as shown in FIG. 5, a waveform which rises at the timing at which the green (G) light is emitted. On the other hand, the imaging control unit 130 obtains the irradiation timings at each of which each of the lights are emitted from the irradiation unit 110, and the imaging control unit 130 obtains a delay time from the irradiation of the green (G) light to the irradiation of the red (R) light. When having detected a rise of the PD signal output by the light receiving element, the imaging control unit 130 presumes that the red (R) light will be emitted when the delay time has passed from the rise. Based on this, the imaging control unit 130 generates the imaging trigger signal for obtaining an image at the time of the rise of the PD signal when the green (G) light is output and an image at the time when the delay time has passed from the rise.

Alternatively, the imaging control unit 130 can also use, as the detection result of the detection unit 120, the circuit signal indicating the irradiation timing output by the control circuit provided within the irradiation unit 110. At this time, since the irradiation timing of each of the light can be recognized from the circuit signal, the imaging control unit 130 generates the imaging trigger signal for causing the imaging unit 140 to obtain an image at each of the irradiation timings of the irradiation light.

In addition, the imaging trigger signal shown in FIG. 5 is generated taking, when the RGB lights are emitted twice, the first irradiation timing of the green (G) light as a trigger 1 (G) and the second irradiation timing of the red (R) light as a trigger 2 (R), but the present invention is not limited to such example. The imaging control unit 130 may generate the imaging trigger signal which takes, when the GB lights are emitted once, the irradiation timing of the green (G) light as the trigger 1 (G) and the irradiation timing of the red (R) light as the trigger 2 (R).

When the imaging unit 140 performs imaging based on the imaging trigger signal generated by the imaging control unit 130, the image at the time when the irradiation unit emits the green (G) light and the image at the time when the irradiation unit emits the red (R) light can be obtained. Then, the information processing unit 150 performs processing of removing the background part irradiated with neither of the green (G) light nor the red (R) light forming the irradiation pattern 200 and obtaining the irradiated site irradiated with the irradiation pattern 200.

For example, as shown in FIG. 6 (a), there is assumed that user's hands are irradiated from the irradiation unit 110 with the irradiation pattern in which the green (G) light and the red (R) light are arranged in a lattice pattern. At this time, the information processing unit 150 performs a difference calculation on the two consecutive images captured by the imaging unit 140. Here, the "consecutive images" refers to a pair of images captured at the consecutive timings of the imaging trigger signals, such as the first image captured at the timing of the trigger 1 (G) and the second image captured at the timing of the trigger 2 (R) in FIG. 5. The lattice-shaped irradiation pattern including the green (G) light and the red (R) light in FIG 6 (a) is emitted, with the green (G) light and the red (R) light flashing at high speed with a time lag.

The information processing unit 150 calculates the difference of the second image captured at the time of the irradiation of the red (R) light from the first image captured at the time of the irradiation of the green (G) light, thereby capable of generating a subtraction image (G-R) and of extracting the irradiated site irradiated with the green (G) light. That is, the information processing unit 150 calculates the difference value by subtracting the brightness of the second image from the brightness of the first image and generates the subtraction image (G-R) in the brightness indicated by the difference value if the difference value is positive or in black if the difference value is zero or less. The subtraction image (G-R) of the FIG. 6 (a) is what is shown in FIG. 6 (b), for example. In addition, in FIG. 6 (b) and FIG. 6 (c), the part in which the difference value is positive is indicated in white and the part in which the difference value is zero or less is indicated in black, for the sake of convenience.

Similarly, the information processing unit 150 calculates the difference of the first image captured at the time of the irradiation of the green (G) light from the second image captured at the time of the irradiation of the red (R) light, thereby capable of generating a subtraction image (R-G) and of extracting the irradiated site irradiated with the red (R) light. That is, the information processing unit 150 calculates the difference value by subtracting the brightness of the first image from the brightness of the second image and generates the subtraction image (R-G) in the brightness indicated by the difference value if the difference value is positive or in black if the difference value is zero or less. By performing such processing, the subtraction image (R-G) of the FIG 6 (a) which is shown in FIG. 6 (c) can be generated and it can be found from the subtraction image (R-G) that the part in which the difference value is positive is the irradiated site irradiated with the red (R) light.

In this manner, the information processing unit 150 can generate the subtraction images from the image irradiated with the green (G) light pattern and the image irradiated with the red (R) light pattern. From each of the subtraction images, the irradiated site irradiated with the green (G) light pattern or the red (R) light pattern is extracted. In the subtraction image, while the irradiated site of the irradiation pattern appears, the part not irradiated with the irradiation pattern such as the background is indicated in black and thus not displayed. This enables the information processing unit 150 to extract only the part irradiated with the irradiation pattern based on the subtraction image.

[Recognition of detection object]

In the present example, by using the image processing method described above which generates the subtraction image from the images obtained by the imaging unit 140 and extracts the part irradiated with the predetermined light, the irradiation pattern 200 including a two-color light such as shown in FIG 7 is emitted to a detection object, and thereby the position of the detection object is recognized. The irradiation pattern 200 in the present example includes, for example, two green (G) lights 202 and 206, and a red (T) light 204 arranged in between the lights 202 and 206. The irradiation pattern 202 is three membranous lights emitted to space, as shown in FIG 1. The photic layers 202, 204 and 206 forming the irradiation pattern 200 are stacked and arranged in a moving direction (y direction in FIG 7) of a fingertip which is a detection object.

The imaging unit 140 obtains images based on the imaging trigger signal for obtaining the image at each of the times when the green (G) light or the red (R) light is emitted. The information processing unit 150 generates the subtraction image (G-R) and the subtraction image (R-G) from the two consecutive images among the images obtained by the imaging unit 140 and detects the irradiated site of the green (G) light and the irradiated site of the red (R) light. Then, from the detected irradiated sites of the two lights, the information processing unit 150 calculates the positional relationship between the irradiation pattern 200 and the fingertip which is the detection object and generates moving information for moving the irradiated position of the irradiation pattern 200 according to the positional relationship.

The positional relationship between the irradiation pattern 200 and the fingertip can be determined by how much the finger F is irradiated with the irradiation pattern 200 (how much the finger F is in contact with the irradiation pattern 200). In the present example, the positional relationship between the irradiation pattern 200 and the fingertip is determined from the number of photic layers in contact with the finger F which changes by the finger F moving in the y direction.

As example of the situation where the three photic layers 202, 204, and 206 are in contact with the finger F, three situations below can be conceived. The first situation is the case, as shown in the right side of FIG. 7 (a) where the finger F is in contact with only the first photic layer 202 which is the green (G) light of the irradiation pattern 200 and the fingertip which is the detection object is not in contact with the second photic layer 204 which is the red (R) light. At this time, the shape of the finger F in contact with the first photic layer 202 appears in the generated subtraction image (G-R), but in the subtraction image (R-G), the irradiated site does not appear since the finger F is not in contact with the red (R) light. As a result, as shown in the left side of FIG. 7(a), only the shape of the finger F in contact with the first photic layer 202 is obtained as an irradiated site 222.

The second situation is the case, as shown in the right side of FIG 7 (b), where the finger F is in contact with the first photic layer 202 and the second photic layer 204 of the irradiation pattern 200. At this time, the shape of the finger F in contact with the first photic layer 202 appears in the generated subtraction image (G-R), and the shape of the finger F in contact with the second photic layer 204 appears in the subtraction image (R-G). As a result, as shown in the left side of FIG 7(b), the shapes of the finger F in contact with the first photic layer 202 and the second photic layer 204 are obtained as the irradiated site 222 and an irradiated site 224.

Then, the third situation is the case, as shown in the right side of FIG 7 (c), where the finger F is in contact with the first photic layer 202, the second photic layer 204, and the third photic layer 206 of the irradiation pattern 200. At this time, the shape of the finger F in contact with the first photic layer 202 and the third photic layer 206 appears in the generated subtraction image (G-R), and the shape of the finger F in contact with the second photic layer 204 appears in the subtraction image (R-G). As a result, as shown in the left side of FIG 7(c), the shapes of the finger F in contact with the first photic layer 202, the second photic layer 204, and the third photic layer 206 are obtained as the irradiated sites 222 and 224 and an irradiated site 226.

Here, the position detection apparatus 100 sets a predetermined positional relationship between the finger F and the irradiation pattern 200 as a target positional relationship for obtaining the three-dimensional position of the fingertip. Then, the position detection apparatus 100 moves the irradiation pattern 200 so that the positional relationship between the finger F and the irradiation pattern 200 will be always in the target positional relationship. In the present example, the target positional relationship is set to the situation shown in FIG. 7 (b). At this time, the information processing unit 150 considers that the fingertip which is the detection object is on the second photic layer 204 and calculates the three-dimensional position of the fingertip taking the part in which the finger F intersects with the second photic layer 204 as the position of the detection object. Thus, the position detection apparatus 100 has to cause the second photic layer 204 of the irradiation pattern 200 to be accurately cast on the fingertip.

The information processing unit 150 generates moving information for moving the irradiated position of the irradiation pattern 200 so that the positional relationship between the irradiation pattern 200 and the fingertip will be the target positional relationship shown in FIG. 7 (b). First, in the case where the positional relationship between the irradiation pattern 200 and the fingertip is in the situation in FIG. 7 (b) which is the target positional relationship, it is determined that the second photic layer 204 of the irradiation pattern 200 is accurately cast on the fingertip. In this case, the information processing unit 150 does not move the irradiation pattern 200 and causes the irradiation pattern 200 to be continuously emitted at the current position.

Next, in the case where the positional relationship between finger F and the irradiation pattern 200 is in the situation in FIG. 7 (a), the fingertip is not in contact with the second photic layer 204, so that the irradiation pattern 200 has to be moved forward toward the fingertip (in the negative direction of the y axis) in order to cause the positional relationship to be the target positional relationship shown in FIG. 7 (b). Accordingly, the information processing unit 150 generates moving information for moving the irradiation pattern 200 forward toward the fingertip and outputs the moving information to the irradiation unit 110.

On the other hand, in the case where the positional relationship between the finger F and the irradiation pattern 200 is in the situation in FIG 7 (c), the fingertip is in contact with the third photic layer 206 beyond the second photic layer 204 (on the side in the positive direction of the y axis). Accordingly, the irradiation pattern 200 has to be moved backward from the fingertip in order to cause the positional relationship to be the target positional relationship shown in FIG 7 (b). Accordingly, the information processing unit 150 generates moving information for moving the irradiation pattern 200 backward from the fingertip and outputs the moving information to the irradiation unit 110.

In this manner, the information processing unit 150 recognizes the positional relationship between the irradiation pattern 200 and the fingertip and controls the irradiated position of the irradiation pattern 200 so that the second photic layer 204 of the irradiation pattern 200 will be cast on the fingertip. This enables the irradiation pattern 200 to be always cast on the fingertip.

In addition, in order to accurately and quickly specify the position of the fingertip which is the detection object, the thickness in the y direction of the first photic layer 202 adjacent in the negative direction of the y axis to the second photic layer 204 of the irradiation pattern 200 may be made greater than the thickness of the second photic layer 204. This facilitates the finger F to touch the first photic layer 202 and the approach of the fingertip to the irradiation pattern 200 can be quickly detected. When the fingertip touches the first photic layer 202, the information processing unit 150 detects the touch and generates moving information for moving the irradiation pattern 200 so that the fingertip will be irradiated with the second photic layer 204. The irradiation unit 110 moves the irradiation pattern 200 based on the generated moving formation and causes the fingertip and the irradiation pattern to be in the target positional relationship.

Moreover, in the case where the irradiation pattern 200 continues to be moved in the same direction, the information processing unit 150 may generate moving information so that the moving speed of the irradiation pattern 200 will be gradually increase. It is often the case that the fingertip and the irradiation pattern 200 are distant when the irradiation pattern 200 continues to be moved in the same direction. Accordingly, by increasing the moving speed of the irradiation pattern 200, the fingertip will be irradiated with the second photic layer 204 of the irradiation pattern 200 earlier.

Here, in the case of detecting the positions of a plurality of detection objects by the position detection apparatus 100 such as a right hand and a left hand performing a gesture, processing of moving the irradiation pattern 200 to each of the detection objects may be performed. For example, as shown in FIG. 8 (b), there is assumed that a right hand RH and a left hand LH are positioned in the space to which the irradiation pattern 200 is emitted and the hands are brought into contact with the irradiation pattern 200. In addition, in the present example, the positional relationship of a finger F at the farthest position from the user (at the farthest position in the positive direction of the y axis) with the irradiation pattern 200 is detected. The finger F at the farthest position from the user can be assumed and determined from the shapes of the hands recognized from the image or can be determined from the shapes of the irradiated sites of the detection objects which can be extracted from the subtraction image generated by the information processing unit 150.

In addition, FIG 8 (a) is a subtraction image generated from the images captured by the imaging unit 140, and FIG. 8 (b) is an irradiation image formed from the viewpoint of the irradiation unit 110. The lines L1 and L2 in FIG 8 (a) correspond to the lines L1 and L2 in FIG 8 (b).

First, as for the right hand RH shown in FIG 8 (b), on the left side of the subtraction image shown in FIG 8 (a), there can be recognized two irradiation areas irradiated with the irradiation pattern 200. By this, it is found that two fingers F of the right hand RH are in contact with the irradiation pattern 200. At this time, it is found, from the shape, that the irradiation area appeared in the subtraction image of FIG 8 (a) is only the site 222 irradiated with the green (G) light which forms the first photic layer 202. By this, the information processing unit 150 determines that the fingers F at the farthest position from the user are in contact only with the first photic layer 202, and the information processing unit 150 generates moving information for controlling the irradiation unit 110 so as to move the irradiation pattern 200 forward toward the fingers F.

On the other hand, as for the left hand LH, on the right side of the subtraction image shown in FIG 8 (a), there can be recognized mainly four irradiation areas irradiated with the irradiation pattern 200. By this, it is found that four fingers F of the left hand LH are in contact with the irradiation pattern 200. At this time, it is found, from the irradiated sites 222, 224 and 226 appeared in the subtraction image of FIG. 8 (a), that three of the four fingers F are irradiated with all the lights of the first photic layer 202, the second photic layer 204 and the third photic layer 206. In addition, at the stage of generating moving information of the irradiation pattern 200, it is only necessary to know the positional relationship between the fingers F at the farthest position from the user with the irradiation pattern 200, and the one finger F at the farthest position from the user does not have to be specifically specified. The information processing unit 150 determines that the fingers F at the farthest position from the user are in contact with the first to the third photic layers 202, 204 and 206, and the information processing unit 150 generates moving information for controlling the irradiation unit 110 so as to move the irradiation pattern 200 backward from the fingers F.

According to the above, the information processing unit 150 generates moving information for moving the irradiation pattern forward toward the fingers F as for the right hand RH, and backward from the fingers F as for the left hand LH. The irradiation unit 110 changes the tilt of the irradiation pattern 200 based on the generated moving information and causes the second photic layer 204 of the irradiation pattern 200 to be cast on the fingertip at the farthest position from the user of each hand. In this manner, the positions of the plurality of detection objects can be detected by the position detection apparatus 100.

In addition, in the present example, the irradiation pattern 200 is formed as a light membrane including a plane surface, but the present invention is not limited to such example. For example, an irradiation pattern may be provided for each predetermined area, thereby detecting by each irradiation pattern the position of a detection object included within each area, or an irradiation pattern may be formed in a curved surface. In the case of forming the irradiation pattern 200 as a light membrane including a plane surface like the present example, as the number of detection objects increases, it becomes difficult to accurately detect the positions of all the detection objects, but control such as changing the form of, or moving the irradiation pattern 200 can be easily performed.

Summarizing the above, the images of the space to which the irradiation pattern 200 is irradiated are obtained by the imaging unit 140 as shown in FIG 9 (a), the subtraction image shown in FIG. 9 (b) is generated from the images, and the irradiated sites of the detection objects are extracted. That is, the part irradiated with the first photic layer 202 of the irradiation pattern 200 in FIG. 9 (a) appears as the irradiated site 222 in the subtraction image shown in FIG. 9 (b). The part irradiated with the second photic layer 204 of the irradiation pattern 200 in FIG. 9 (a) appears as the irradiated site 224 in the subtraction image shown in FIG. 9 (b). The part irradiated with the third photic layer 206 of the irradiation pattern 200 in FIG. 9 (a) appears as the irradiated site 226 in the subtraction image shown in FIG. 9 (b).

With use of image processing technique publicly known, such as binarization processing or connected component extraction processing, the position of the fingertip which is the detection objects can be separately detected from the subtraction image of FIG. 9 (b). Moreover, from the irradiated position of the irradiation pattern 200, the distance between the fingertips and the imaging unit 140 (namely, the distance in the depth direction) can be determined. Consequently, the three-dimensional positions of the fingertips in space can be calculated. Then, a method of calculating the three-dimensional position of a detection object in space will be described.

[Calculation method of three-dimensional position of detection object]

FIG 10 (a) shows a subtraction image generated from images captured by the imaging unit 140, and FIG. 10 (b) shows an irradiation image formed from the viewpoint of the irradiation unit 110. Here, the images captured by the imaging unit 140 are images of the space seen from the direction perpendicular to the height direction (z direction) of the space, and the irradiation image formed from the viewpoint of the irradiation unit 110 is an image of the space seen from the above. In the present example, the positional relationship between the irradiation unit 110 and the imaging unit is calibrated by a method known as epipolar geometry. With use of the epipolar geometry, there can be obtained the correspondence relationship between the views of the same point in a three-dimensional space seen from two different positions.

First, the irradiation pattern 200 emitted from the irradiation unit 110 to space is imaged by the imaging unit 140, and a subtraction image is generated from the captured images by the information processing unit 150. With the position detection method described above, the irradiated site of the detection object irradiated with the irradiation pattern 200 is extracted from the subtraction image and the position of the detection object can be specified. Subsequently, the information processing unit 150 correlates a plurality of points in the first coordinate system formed from the viewpoint of the irradiation unit 110 with a plurality of points in the second coordinate system formed from the viewpoint of the imaging unit 140. By this, the fundamental matrix F in the epipolar geometry is calculated. At this time, between the point Pc (Xc, Yc) in the second coordinate system and the corresponding point Pp (Xp, Yp) in the first coordinate system, the relationship indicated by the following equation 1 is established.

[Equation 1]

$$(Xc, Yc) * F * (Xp, Yp)' = 0$$

$\cdots$(Equation 1)

In addition, indicates a transposed matrix. The equation 1 indicates that the point on the subtraction image generated from the images captured by the imaging unit 140 exists at a certain point on the corresponding line on the irradiation image, and on the other hand, the point on the irradiation image exists at a certain point on the corresponding line on the subtraction image. Such line is referred to as epipolar line LE. By using this relationship, the intersection of the epipolar line LE on the irradiation image shown in FIG. 10 (b) and the emitted irradiation pattern (the second photic layer 204 in the present example) is calculated, and thereby the three-dimensional position of the fingertip which is the detection object can be calculated.

[Second specific example: position detection method using irradiation pattern including one kind of light]

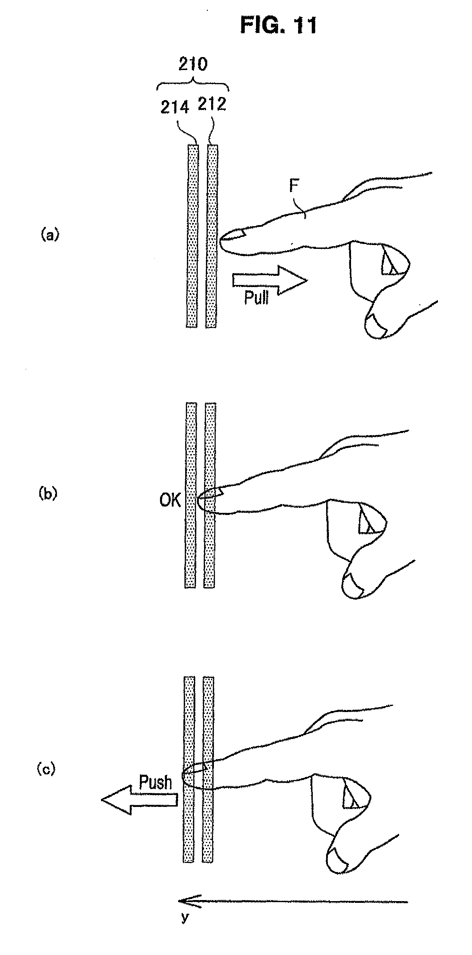

Next, a position detection method using an irradiation pattern including one kind of light will be described based on FIG. 11. In addition, FIG. 11 is an explanatory diagram showing positional relationships, in the case of using an irradiation pattern 210 including one kind of light, between the irradiation pattern 210 and a detection object and the moving direction of the irradiation pattern 210 based on the positional relationship.

In the present example, the positional relationship between the irradiation pattern 210 and the detection object is grasped from the irradiation pattern 210 including one kind of light. At this time, the irradiation pattern 210 is, as shown in FIG. 11, including two photic layers: the first photic layer 212 and the second photic layer 214. The first photic layer 212 and the second photic layer 214 are provided with a predetermined distance therebetween in the y direction. Since each of the photic layers 212 and 214 is including the same kind of light, they are emitted at the same time. As in the present example, with use of the irradiation pattern 210 including one kind of light, it is only necessary to capture an image at the irradiation timing at which the light is emitted, and a configuration of the position detection apparatus 100 can be made simple.

The positional relationship between the irradiation pattern 210 and the fingertip can be determined, in the same manner as the first specific example, by how much the finger F is irradiated with the irradiation pattern 210. In the present example, the positional relationship between the irradiation pattern 210 and the fingertip is determined in three situations. First, the first situation is the case, as shown in FIG. 11 (a), where the fingertip is not in contact with the irradiation pattern 210. That is, it is the case where the irradiation pattern 210 is positioned ahead of the fingertip (on the side in the positive direction of the y axis). The second situation is the case, as shown in FIG. 11 (b), where the fingertip is only in contact with the first photic layer 212. Then, the third situation is the case, as shown in FIG 11 (c), where the fingertip is in contact with the first photic layer 212 and the second photic layer 214.

In the present example, the target positional relationship between the irradiation pattern 210 and the fingertip (the target positional relationship) is the position shown in FIG. 11 (b). Therefore, the information processing unit 150 generates moving information for moving the irradiated position of the irradiation pattern 210 so that the positional relationship between the irradiation pattern 210 and the fingertip will be the target positional relationship shown in FIG. 11 (b). First, in the case where the positional relationship between the finger F and the irradiation pattern 210 is in the situation in FIG. 7 (b) which is the target positional relationship, it is determined that the first photic layer 212 of the irradiation pattern 210 is accurately cast on the fingertip. In this case, the information processing unit 150 does not move the irradiation pattern 210 and causes the irradiation pattern 210 to be continuously emitted at the current position.

Next, in the case where the positional relationship between finger F and the irradiation pattern 210 is in the situation in FIG 11 (a), the fingertip is not in contact with the first photic layer 212, so that the irradiation pattern 210 has to be moved forward toward the fingertip (in the negative direction of the y axis) in order to cause the positional relationship to be the target positional relationship shown in FIG 11 (b). Accordingly, the information processing unit 150 generates moving information for moving the irradiation pattern 210 forward toward the fingertip and outputs the moving information to the irradiation unit 110. On the other hand, in the case where the positional relationship between the finger F and the irradiation pattern 210 is in the situation in FIG 11 (c), the fingertip is in contact with the second photic layer 214 beyond the first photic layer 212. Accordingly, the irradiation pattern 210 has to be moved backward from the fingertip in order to cause the positional relationship to be the target positional relationship shown in FIG. 11 (b). Accordingly, the information processing unit 150 generates moving information for moving the irradiation pattern 210 backward from the fingertip and outputs the moving information to the irradiation unit 110.

In this manner, the information processing unit 150 recognizes the positional relationship between the irradiation pattern 210 and the fingertip and controls the irradiated position of the irradiation pattern 210 so that the first photic layer 212 of the irradiation pattern 210 will be cast on the fingertip. This enables the irradiation pattern 210 to be always cast on the fingertip. In addition, if the first photic layer 212 and the second photic layer 214 are brought too close to each other, the fingertip is prone to touch both the first photic layer 212 and the second photic layer 214, and it is difficult for the fingertip to be in contact only with the first photic layer 212. That makes the irradiated position of the irradiation pattern 210 unstable and makes the detection position changed inadvertently. Thus, for example, a space of about several millimeters had better be provided between the first photic layer 212 and the second photic layer 214.

The position of the detection object obtained by the method of the present example can be used, in the same manner as the first specific example, as information for detecting the position of the detection object in the three-dimensional space. That is, by applying the epipolar geometry to images captured by the imaging unit 140 and an irradiation image formed from the viewpoint of the irradiation unit 110, the position of the detection object in the three-dimensional space can be obtained.

The position detection apparatus 100 according to the embodiment of the present invention and the position detection method using the position detection apparatus 100 has been described above. According to the present embodiment, the imaging unit 140 images the space to which the irradiation pattern 200 or 210 is emitted, at the timings at each of which the irradiation pattern 200 or 210 is emitted. The information processing unit 150 of the position detection apparatus 100 analyzes the captured images, specifies the part in which the detection object is irradiated with the irradiation pattern, and obtains the positional relationship between the detection object and the irradiation pattern. Then, the information processing unit 150 generates moving information for moving the irradiated position of the irradiation pattern 200 or 210 so that the positional relationship will be the target positional relationship. The irradiation unit 110 moves the irradiated position of the irradiation pattern 200 or 210 based on the generated moving information. This enables the position detection apparatus 100 to obtain the three-dimensional position of the detection object in the space stably and with high accuracy.

[Usage example of three-dimensional position information of detection object]

The three-dimensional position information of a detection object obtained in this manner can be used for a variety of gesture interfaces. For example, a fingertip can be used as a two-dimensional or three-dimensional mouse pointer. Alternatively, a gesture by a plurality of fingertips can be recognized and used as input information. For example, the scale of an image can be controlled by adjusting a space between a thumb and a forefinger, and an image can be scrolled by swinging a hand. Moreover, by an operation with both hands such as pushing or pulling an irradiation pattern with both hands, a mouse pointer in a three-dimensional space can be moved back and forth. Furthermore, three-dimensional navigation can be performed by using a direction of the irradiation pattern.

Although the preferred embodiments of the present invention have been described in the foregoing with reference to the drawings, the present invention is not limited thereto. It should be understood by those skilled in the art that various modifications, combinations, sub-combinations and alterations may occur depending on design requirements and other factors insofar as they are within the scope of the appended claims or the equivalents thereof.

For example, in the embodiment described above, a DLP projector is used as the irradiation unit 110 for emitting an irradiation pattern, but the present invention is not limited to such example. For example, there may be used a beam laser module for outputting a linear and movable laser beam including a plurality of beams. If an angle displacement with two degrees of freedom is possible by drive-controlling such beam laser module by a motor or the like, processing equivalent to the above mentioned embodiment is possible by controlling the angle displacement of the beam laser.

The present application contains subject matter related to that disclosed in Japanese Priority Patent Application JP 2009-184721 filed in the Japan Patent Office on August 7, 2009.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

**Claims**

1. A position detection apparatus comprising:

    an irradiation unit for emitting an irradiation pattern which is a light group including one or more kinds of irradiation lights to a detection object in space;
    an imaging unit for obtaining one or more images by imaging the detection object;
    an imaging control unit for controlling imaging timings of the imaging unit, based on irradiation timings at each of which the irradiation unit emits the irradiation pattern;
    an analysis unit for extracting an irradiated site in which the detection object is irradiated with the irradiation pattern and for analyzing a positional relationship between the detection object and the irradiation pattern, based on one or more image obtained by the imaging unit; and
    a movement processing unit for moving an irradiated position of the irradiation pattern so that the detection object will be irradiated with the irradiation pattern, based on the positional relationship between the detection object and the irradiation pattern analyzed by the analysis unit.

2. The position detection apparatus according to claim 1,
    wherein the irradiation pattern includes at least a first irradiation pattern and a second irradiation pattern emitted at different timings,
    wherein the imaging control unit causes the imaging unit to obtain an image at an irradiation timing at which the first irradiation pattern is emitted and an image at an irradiation timing at which the second irradiation pattern is emitted,
    wherein the analysis unit compares a first image obtained when the first irradiation pattern is emitted with a second image obtained when the second irradiation pattern is emitted, and the analysis unit recognizes each of irradiated positions of the first irradiation pattern and the second irradiation pattern on the detection object, and
    wherein the movement processing unit moves an irradiated position of the irradiation pattern based on the irradiated positions of the first irradiation pattern and the second irradiation pattern on the detection object.

3. The position detection apparatus according to claim 2,
    wherein the irradiation pattern includes the first irradiation pattern including a first photic layer and a third photic layer which are adjacent to each other in a moving direction of the irradiation pattern and the second irradiation pattern including a second photic layer positioned in between the first photic layer and the third photic layer, and
    wherein the analysis unit determines that the irradiation pattern is cast on the detection object when the detection object is irradiated with the first photic layer and the second photic layer.

4. The position detection apparatus according to claim 3,
    wherein when the detection object is irradiated only with the first photic layer, the movement processing unit moves the irradiation pattern so that the detection object will be further irradiated with the second photic layer, and
    wherein when the detection object is irradiated with the first photic layer, the second photic layer, and the third photic layer, the movement processing unit moves the irradiation pattern so that the detection object will be irradiated only with the first photic layer and the second photic layer.

**5.** The position detection apparatus according to claim 1,
wherein the irradiation pattern includes a first photic layer and a second photic layer which are adjacent to each other with a predetermined distance in between in a moving direction of the irradiation pattern and which are emitted at the same irradiation timings,
wherein the imaging control unit causes the imaging unit to obtain one or more images at the irradiation timings of the irradiation pattern,
wherein the analysis unit recognizes from one image obtained by the imaging unit each of the irradiated positions of the first photic layer and the second photic layer on the detection object, and
wherein the movement processing unit moves the irradiated position of the irradiation pattern based on the irradiated positions of the first photic layer and the second photic layer on the detection object.

**6.** The position detection apparatus according to claim 5,
wherein when the detection object is irradiated only with the first photic layer, the analysis unit determines that the irradiation pattern is cast on the detection object.

**7.** The position detection apparatus according to claim 6,
wherein when the detection object is not irradiated with the irradiation pattern, the movement processing unit moves the irradiation pattern so that the detection object will be irradiated with the first photic layer, and
wherein when the detection object is irradiated with the first photic layer and the second photic layer, the movement processing unit moves the irradiation pattern so that the detection object will be irradiated only with the first photic layer.

**8.** The position detection apparatus according to claim 1,
wherein the analysis unit is capable of analyzing positional relationships between a plurality of the detection objects and the irradiation pattern, and
wherein the movement processing unit moves an irradiated position of the irradiation pattern based on each of the positional relationships between each of the detection objects and the irradiation pattern.

**9.** The position detection apparatus according to claim 8,
wherein the irradiation pattern is formed in a planar membrane, and
wherein the movement processing unit moves the irradiation pattern so as to cover a plurality of detection objects included in the space.

**10.** The position detection apparatus according to claim 8,
wherein the irradiation pattern is provided for each of predetermined areas formed by dividing the space, and
wherein the movement processing unit moves an irradiated position of the irradiation pattern so that a detection object included in the area will be irradiated with the irradiation pattern.

**11.** The position detection apparatus according to claim 1, further comprising:

a position calculation unit for calculating a position of the detection object,
wherein the position calculation unit calculates a three-dimensional position of the detection object in the space based on the images obtained by the imaging unit and an irradiation image formed from the viewpoint of the irradiation unit.

**12.** The position detection apparatus according to claim 11,
wherein the position detection unit calculates the three-dimensional position of the detection object in the space by using the epipolar geometry.

**13.** A position detection method, comprising the steps of:

emitting an irradiation pattern which is a light group including one or more kinds of irradiation lights to a detection object in space;
controlling imaging timings of the imaging unit for imaging the detection object, based on irradiation timings at each of which the irradiation unit emits the irradiation pattern;
obtaining one or more images by the imaging unit, based on the imaging timings;

extracting an irradiated site in which the detection object is irradiated with the irradiation pattern and for analyzing a positional relationship between the detection object and the irradiation pattern, based on one or more images obtained by the imaging unit; and

moving an irradiated position of the irradiation pattern so that the detection object will be irradiated with the irradiation pattern, based on the positional relationship between the detection object and the irradiation pattern.

**FIG. 1**

EP 2 284 667 A1

# FIG. 2

~100

~110

IRRADIATION UNIT

~150

INFORMATION PROCESSING UNIT

→ POSITIONAL INFORMATION

~130

IMAGING CONTROL UNIT

~140

IMAGING UNIT

~120

DETECTION UNIT

# FIG. 3

```
                    ┌─────────────┐
                    │    START    │
                    └─────────────┘
                           │
                           ▼
        ┌──────────────────────────────────────┐
        │     OUTPUT IRRADIATION PATTERN        │──── S100
        └──────────────────────────────────────┘
                           │
                           ▼
        ┌──────────────────────────────────────┐
        │   OBTAIN IMAGES OF DETECTION OBJECT   │──── S110
        └──────────────────────────────────────┘
                           │
                           ▼
        ┌──────────────────────────────────────┐
        │  ANALYZE IMAGES AND DETECT POSITION OF │──── S120
        │           DETECTION OBJECT            │
        └──────────────────────────────────────┘
                           │
                           ▼
        ┌──────────────────────────────────────┐
        │ MOVE IRRADIATION PATTERN TO POSITION OF│──── S130
        │           DETECTION OBJECT            │
        └──────────────────────────────────────┘
                           │
                           ▼
                    ┌─────────────┐
                    │     END     │
                    └─────────────┘
```

# FIG. 4A

# FIG. 4B

**FIG. 5**

IRRADIATION TIMING

G | | B | R | G | | B | R | G | | B | R | G

T

PD SIGNAL

IMAGING TRIGGER
SIGNAL

TRIGGER 1 (G)

TRIGGER 2 (R)

EP 2 284 667 A1

FIG. 6

(a)

G  R

G-R

R-G

(b)

(c)

EP 2 284 667 A1

# FIG. 7

# FIG. 8

# FIG. 9

(a)

202
204
206

(b)

222
224
226

# FIG. 10

(a)

Pc(Xc,Yc)

(b)

204

Pp(Xp,Yp)

LE

# FIG. 11

(a)

(b)

(c)

Europäisches
Patentamt

European
Patent Office

Office européen
des brevets

# EUROPEAN SEARCH REPORT

Application Number

EP 10 17 1501

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/137494 A1 (TULBERT DAVID J [CA]) 24 July 2003 (2003-07-24) * abstract; figures 1, 3a, 3b * * paragraphs [0009] - [0013], [0027] - [0033], [0071] - [0075], [0105], [0134], [0153] * * claims 1, 23, 24, 25 * ----- | 1-13 | INV. G06F3/042 |
| A | US 2008/055266 A1 (HARADA TSUTOMU [JP] ET AL) 6 March 2008 (2008-03-06) * abstract; figures 1,5,13a-13d,15,16,17 * * paragraphs [0010], [0011], [0016], [0063], [0064], [0076], [0105] * * claim 1 * ----- | 1-13 | |
| A | EP 2 063 347 A1 (FUNAI ELECTRIC CO [JP]) 27 May 2009 (2009-05-27) * abstract; figures 1,2 * * paragraphs [0011], [0031] - [0038], [0063] - [0067] * ----- | 1-13 | |
| A,D | JP 11 024839 A (SONY CORP) 29 January 1999 (1999-01-29) * the whole document * | 1-13 | TECHNICAL FIELDS SEARCHED (IPC) G06F |
| A | -& US 2001/012001 A1 (REKIMOTO JUNICHI [JP] ET AL) 9 August 2001 (2001-08-09) * abstract; figures 1,2 * ----- | 1-13 | |

The present search report has been drawn up for all claims

| Place of search | Date of completion of the search | Examiner |
|---|---|---|
| Munich | 25 October 2010 | Pfaffelhuber, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 10 17 1501

This annex lists the patent family members relating to the patent documents cited in the above-mentioned European search report.
The members are as contained in the European Patent Office EDP file on
The European Patent Office is in no way liable for these particulars which are merely given for the purpose of information.

25-10-2010

| Patent document cited in search report | | Publication date | Patent family member(s) | | Publication date |
|---|---|---|---|---|---|
| US 2003137494 | A1 | 24-07-2003 | AU 5208301 A | | 12-11-2001 |
| | | | WO 0184251 A2 | | 08-11-2001 |
| | | | EP 1287409 A2 | | 05-03-2003 |
| | | | JP 2003532216 T | | 28-10-2003 |
| US 2008055266 | A1 | 06-03-2008 | NONE | | |
| EP 2063347 | A1 | 27-05-2009 | CN 101435981 A | | 20-05-2009 |
| | | | JP 2009123006 A | | 04-06-2009 |
| | | | US 2009128716 A1 | | 21-05-2009 |
| JP 11024839 | A | 29-01-1999 | JP 3968477 B2 | | 29-08-2007 |
| | | | US 2001012001 A1 | | 09-08-2001 |
| US 2001012001 | A1 | 09-08-2001 | JP 3968477 B2 | | 29-08-2007 |
| | | | JP 11024839 A | | 29-01-1999 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11024839 A
- JP 2009043139 A
- JP 2009184721 A